# EUROPEAN PATENT APPLICATION

(11) **EP 3 378 620 A1**
(43) Date of publication of application: **26.09.2018**
(21) Application number: 15908684.2
(22) Date of filing: 20.11.2015
(51) Int. Cl.: B29C 45/16, B29C 45/27, B29C 41/36

(54) **METHOD FOR PRODUCING THREE-DIMENSIONAL ITEMS WITH A FLEXIBLE WALL**

(71) Applicant: Simplicity Works Europe S.L., 03205 Elche (Alicante) (ES)
(72) Inventor: HERNÁNDEZ HERNÁNDEZ, Adrián, 03670 Monforte del Cid - (Alicante) (ES); HENAREJOS JIMENEZ, Daniel, 03006 Alicante (ES); BANUS, Christopher T., Nashua, New Hampshire 03062 (US)
(74) Representative: Carvajal y Urquijo, Isabel
(86) International application number: PCT/ES2015/070834
(87) International publication number: WO 2017/085333

(57) **Abstract**

Method for manufacturing three-dimensional articles with a flexible wall, by means of a mould (1'- 2') and a counter-mould (3') between which pieces (4') are arranged that will form the article to be obtained. Between the pieces (4'), the mould (1'- 2') and counter-mould (3') a conduit network (7) and cavities (6) are delimited into which, through first points (8), a plastic material is injected in a melted condition, whereas through one or more second points (9) said conduit network is connected to a vacuum network.

## Description

### Field of the invention

The object of the present invention is a method for manufacturing three-dimensional articles which are limited by an outer wall including at least an external layer of flexible nature defining the visible surface thereof.

The method of the invention is carried out by means of a mould and counter-mould between which a space is delimited having the shape and volume of the article to be obtained, wherein, bound onto the inner surface of the mould, there is arranged a laminar wall of flexible nature, with one or more pieces, which will constitute the outer layer of the article to be obtained and which may comprise a second inner layer or lining. By means of the method of the invention, caps, lycra dresses, trousers, shirts, jackets, etc., can be manufactured.

The method of the invention also encompasses composite material manufacturing, with impregnated fibres, in order to provide generally light and resistant mechanical properties.

### Background of the invention

The methods for manufacturing garments, such as caps, lycra dresses, trousers, shirts, etc., are intensive regarding labour due to a fundamental reason: the seams.

In general, the pieces forming the final product have to be cut according to patterns made following the desired ergonomics. Then these pieces are passed through different operating machines, with people making these seams.

There are different types of seams, some implying more work than others, but which always involve a relatively long time and accurate and skilled labour, becoming more and more difficult to find qualified labour in first world countries, given the low salaries being paid for this activity. This makes enterprises to be forced to move to countries providing cheap labour, with all the disadvantages of delocalisation, logistics, services, quality, etc., that this entails.

On the other hand, it should be emphasized that seams require making holes in the pieces to be cut, so in dresses and garments that must provide for a tight closure, it is necessary to apply a tape or sealing glue so that water does not penetrate through the seams orifices.

From PCT/ES20112/070139 a method is known for manufacturing three-dimensional articles by means of a mould and counter-mould, between which a space is delimited having the shape and volume of the article to be obtained. This article is made up based on laminar pieces, of flexible nature, arranged between the mould and counter-mould, generally on the mould surface, wherein the mould and the counter-mould are separated to each other a distance being approximately similar to the thickness of the laminar pieces. Thus, between consecutive laminar pieces and the mould and counter-mould surface, ducts and volumes are delimited wherein a plastic material is injected in liquid state or without curing, serving as a means for binding the laminar pieces. The method described is intended for manufacturing shoes, bags, garments and accessories. In order to facilitate positioning of the pieces forming the cutting pattern, a flexible laminar template, onto which the pieces to be cut are fixed, being duly positioned, and then the template is fixed, by the free surface thereof, onto the mould surface. The article to be obtained may also comprise a flexible laminar lining, being arranged onto the counter-mould and fixed to the cutting pattern to be cut by means of injected plastic material so as to bind the pieces to be cut.

The described method may show problems in case the ducts network is or includes small sections and also features a great length or running course, all of which may hinder the whole filling of the conduit network.

For clothing garments such as tight dresses or trousers trouble may arise, since the injected plastic, by partial solidification or viscosity change, may plug the conduits due to the length thereof, which will prevent the injected plastic from reaching the end of the conduit network.

In order to perform the method being described it is necessary for the pieces forming the mould and counter-mould to be perfectly adjusted to each other, thus featuring a tight closure. This circumstance may be attained, for example, with the mould described in PCT/ES2014/070672, consisting of at least two pieces that may be attached to each other, between which the volume of the article to be obtained is delimited. These pieces are provided, from their mutual support surfaces, with cavities delimiting tight chambers where, by these being connected to a vacuum source, a low pressure is created being sufficient for fixing said pieces to each other. The pieces will keep their shape because of the low pressure created and may be provided with tight gaskets around the cavities.

### Description of the invention

The method of the invention may be carried out in a similar way to that described in PCT/ES2012/070139, by means of a mould and counter-mould between which a chamber is delimited having the shape and volume of the article to be obtained. This article will be limited by at least a flexible outer wall and may also include a second inner layer or lining, also flexible, the outer wall consisting of laminar pieces being arranged between the mould and counter-mould, generally on the mould surface, wherein between the pieces and the mould and counter-mould surfaces, some conduits and volumes are delimited in which a plastic material is injected in liquid state or without curing, that is used, upon solidification thereof, as an binding means for the laminar pieces.

Similarly, the inner wall or lining could consist of pieces being arranged onto the inner surface of the counter-mould, and the separation lines of which will match the pieces of the outer wall, for binding thereof to the injected plastic to be realized.

When the conduits network features a great length, from the injection point or points to the end thereof, there is a risk that the injected plastic solidifies, at least partially, before reaching the end of said network of conduits, thus plugging them and preventing the plastic to flow and reach the end of the conduits.

The problem set forth is solved with the method of the invention, according to which injection of plastic material is realized through one or more first points from the conduit network, while through a second point or points of the same conduit network, being distant from the first points, said conduit network is connected to a vacuum source, by means of which a low pressure is created inside the conduit network, which helps flowing of the melted plastic being injected, increasing the flowing speed for preventing partial solidification thereof or viscosity changes by chemical reaction from taking place, as it happens in resin or polyurethane bicomponents. Thus, it is guaranteed that the injected plastic flows along the whole conduit network, from the first injection point or points to the second point or points, with conduits, and even volumes being situated at the end of the network where said conduits open into.

In order to simplify this operation the conduit network could flow, along the second cited point or points, into at least a common vacuum chamber through which vacuum will be effected in the whole network of conduits at the same time. With this system, by means of a single connection to a vacuum source, that of the above cited common vacuum chamber, it is possible to create at the same time vacuum in the whole conduit network.

The mould and counter-mould used in the method of the invention may correspond to that described in PCT/ES2014/070672, where said moulds and counter-moulds, or the pieces forming them, from the mutual support surfaces, are provided with facing cavities that delimit, when attaching mould and counter-mould, or the pieces comprising them tight chambers that, by them being connected to a vacuum source, a low pressure is created being sufficient for attaining attachment between the components. The pieces forming the mould and counter-mould will keep their shapes and be provided with tight gaskets around the cavities thereof.

With this type of mould and according to a possible embodiment of the method of the invention, the conduit network through which the melted plastic will be injected, is connected, via the second point or points mentioned above, to the cavities forming the tight chambers created by attaching the mould and counter-mould, tight cameras which in turn are connected to the vacuum source. Thus, the vacuum acts firstly on the conduit network, and then, once the network is occupied by the injected plastic, acts on the tight chambers, thereby achieving, by means of a single connection to a vacuum source, the required low pressure in the channel network and in the tight chambers, acting as vacuum chambers.

According to a possible embodiment, the material injected through the conduit network may consist of a plastic that, for example by addition of certain additives, undergoes during injection thereof a reaction capable of causing certain expansion of the injected product. This circumstance produces certain thrust over the product being injected, which is added to the vacuum effect created in the conduit network, thus providing for easier displacement of the injected product along said network.

The injected plastic material may penetrate between the mould and counter-mould, reaching the pieces forming the article to be obtained. This circumstance may be advantageous when said pieces are made of composite materials, such as carbon fibre, in which case it is desirable that these become impregnated with the injected plastic material.

However, in most cases this circumstance may involve undesired pollution for the pieces forming the article to be obtained. In order to avoid this problem, the mould and counter-mould may be provided, along the perimeter of the areas to be occupied by the pieces forming the article to be obtained, with tight gaskets.

When the pieces that will form the article to be obtained are of porous nature, for example based on fabrics, the above mentioned gaskets may include or may be made up of materials featuring high deformation capacity, such as silicone, which, by being compressed between the mould and counter-mould, flow and penetrate between said mould and counter-mould, reaching said pieces, partially penetrating therein, closing the weave thereof along a peripheral strip, and thus forming a closure that will prevent the injected plastic material from penetrating in the rest of the pieces.

Fastening of the pieces forming the article to be obtained onto the corresponding areas of the mould may be attained by means of vacuum created through the conduits opening into the mould surface, in the areas that said pieces will occupy, and start from the chambers through which the vacuum is created in the channel network and which can be the tight chambers or the vacuum chambers mentioned above.

This effect may also be attained by applying a substance acting as slip agent, such as silicone, on the areas of the mould that will occupy the pieces forming the article to be obtained. This solution may be added to the vacuum effect mentioned above, thus achieving a more precise, stable and fast positioning of the pieces forming the article to be obtained inside the mould.

The mould tightness may be achieved by providing the facing surfaces of the pieces making up said mould with a coating featuring high deformation capacity, for example one based on silicone, which would be compressed upon attaching said pieces to each other, thus guaranteeing the closure and tightness between them.

Another possible way for obtaining tightness of the mould may consist of applying, on the outer surface of the pieces forming the mould, a coating based on a material having high deformation and dimensioning capacity so that, when attaching said pieces, in order to close the mould, the facing edges thereof rest on each other, providing for the mould sealing.

### Brief description of the drawings

The attached drawings represent a non-limiting exemplary embodiment, wherein:
- Figure 1 is a perspective view of a mould and counter-mould for obtaining a neoprene suit, according to the method indicated in the state of the art.
- Figure 2 is a schematic section of mould and counter-mould for manufacturing shoes with the method of the invention.
- Figure 3 is a partial section of the mould from figure 1, taken according to the cutting line III-III.
- Figure 4 is a similar section to that from figure 3, showing an execution variant.
- Figure 5 shows a sectional profile of facing edges of laminar pieces that will form the article to be obtained.
- Figure 6 is a similar section to that of figure 5, showing a possible fastening system for the laminar pieces on the mould.
- Figure 7 shows a perspective of mould consisting of three pieces provided with an outer sealing coating.
- Figure 8 shows a section of a peripheral sealing system of the pieces forming the article to be obtained, during the injection step.

### Detailed description of an embodiment

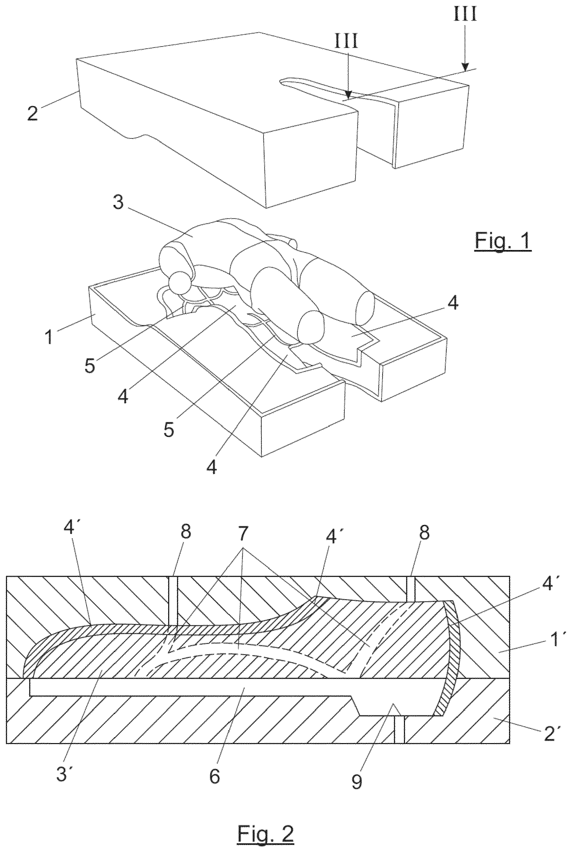

Figure 1 shows a mould that can be made up of two pieces (1 and 2) or more, and a counter-mould (3) that can be also made up of one or more pieces. Between pieces (1 and 2) of the mould and the counter-mould (3) there is a space being delimited the shape and volume of which corresponds to that of the article to be obtained. In this case it is a neoprene suit.

According to the method described in PCT/ES2012/070139, the article to be obtained, in this case the neoprene suit, comprises laminar pieces (4) being arranged on the inner surface of the mould (1-2) and will have a thickness being approximately the same as the distance between the mould and the counter-mould. Between the pieces (4) and the surface of the mould (1-2) channels (5) are delimited being enclosed by the counter-mould (3), forming a conduit network being interconnected to each other, through which a plastic material will be injected in a melted state, which upon solidification thereof will be used as a means for attaching the pieces (4).

In order to make the melted plastic material flow easily along the conduit network, according to the present invention, said conduit network is connected, through points being distant to those for injecting the melted plastic material, to a vacuum source so as to create in the conduit network a low pressure that guarantees the melted plastic to flow from the injection point or points to the end of the conduit network.

As it has been already indicated, flow of the plastic material being injected through the conduit network can be improved by using a material that, when it is injected therein, reacts producing certain expansion thereof.

Figure 2 shows a mould, also consisting of two pieces (1' y 2') and a counter-mould (3'), for obtaining a shoe. The counter-mould (3') adopts the shape of a shoe tree. As in the previous case, on the inner surface of the piece (1') of the mould, laminar pieces (4') are arranged being of a flexible nature, configuring the shoe upper and the thickness of which corresponds approximately to the distance between the facing surfaces of said pieces (1') and the counter-mould (3'). The mould is closed by means of the piece (2'), delimiting with the counter-mould (3') a chamber (6), the volume of which may correspond to that of the shoe sole and heel.

Also, as in the previous case, between the laminar pieces (4') and the facing surfaces of the mould (1'-2') and counter-mould (3') a conduit network (7) is formed through which melted plastic will be injected.

According to the invention the injection of melted plastic material is performed in the conduit network (7) through one or more first points (8), whereas through one or second points (9) said conduit network is connected to a vacuum source, with the second points (9) being distant from the first points (8) and preferably situated at the end of the conduit network, considering the first points (8) as the beginning or start of said network. In the first injection point or points (8) a check valve is arranged for preventing the injected plastic to come out, once injection is finished.

With this system, it is guaranteed that the melted plastic being injected through the first points (8) runs along the whole conduit network, until reaching the second points (9) situated at the end of said conduit network.

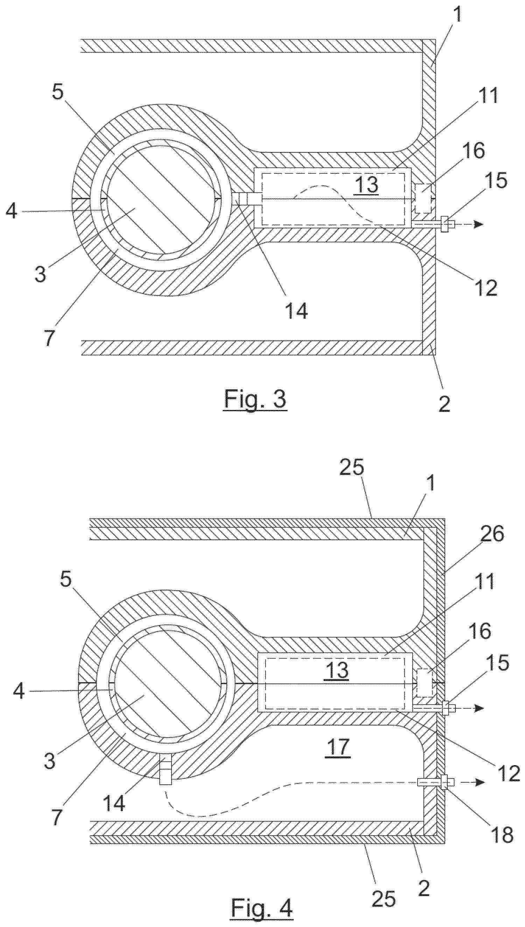

The mould of figure 1 can be as that described in PCT/ES2014/070672, wherein the pieces (1-2) making up the mould, figure 3, are provided at the attaching surfaces thereof with recesses (11 and 12) facing each other, which form a tight chamber (13) which is connected to a vacuum source, so as to secure the attachment and closure between pieces (1 and 2) of the mould. Applying the method of the invention, the conduit network (5) may be connected to the vacuum source through the tight chambers (13). For that purpose, as it is shown in figure 3, the conduit network (5) is connected via second points (14) to the tight chamber or chambers (13) which in turn is connected to a vacuum source, for example through the valves (15). Between the pieces (10-11) there can be gaskets (16) arranged for tightness of the tight chambers (13).

In case the conduit network (5) requires, due to the length thereof, several second points (14) through which the vacuum is performed, these second points may open into at least an auxiliary vacuum chamber (17), figure 4, provided with a connection (18) to a vacuum source. Thus, by means of a single connection (18) to a vacuum source the required low pressure may be transmitted to the conduit network through several second points (14). The pieces (10-11) making up the mould may correspond to the constitution being described in reference to figure 3.

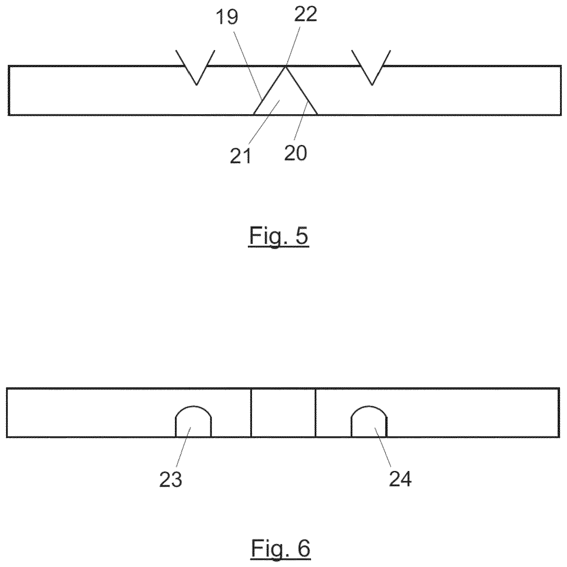

When the conduit network opens into one or more tight (13) or vacuum (17) chambers, through which vacuum is performed in the conduit network, filters can be arranged at said mouths that, by allowing the air to pass through, prevent the plastic injected through the conduit network from entering into the chambers. Preferably, the laminar pieces (4-4') forming the product to be obtained will be cut with oblique edges (19-20) facing each other, as it is shown in figure 5, such that angle-sectioned channels (21) are formed between them, with the vertex (22) directed towards the outer surface of the product or garment to be obtained.

Fastening of the laminar pieces (4-4') on the surface of the pieces (1-2) forming the mould can be guaranteed by means of ribs projecting from said surfaces and being accommodated into channels (23-24) made on the facing surfaces of the laminar pieces (4-4'), figure 6.

Also fastening of the pieces forming the product to be obtained on the mould may be attained by means of a vacuum effect, created through the conduits opening onto the mould surface, in the areas that said pieces will occupy, and starting from the tight (13) or vacuum (17) chambers through which vacuum is created in the conduit network.

As it can be seen in figure 4, the pieces (1 and 2) making up an outer coating (25) based on a material having high deformation capacity, such as silicone, the edges (26) of which rest on and are pressed against each other, upon attaching the pieces (1 and 2), providing for a mould closure being tight with respect to the outer one.

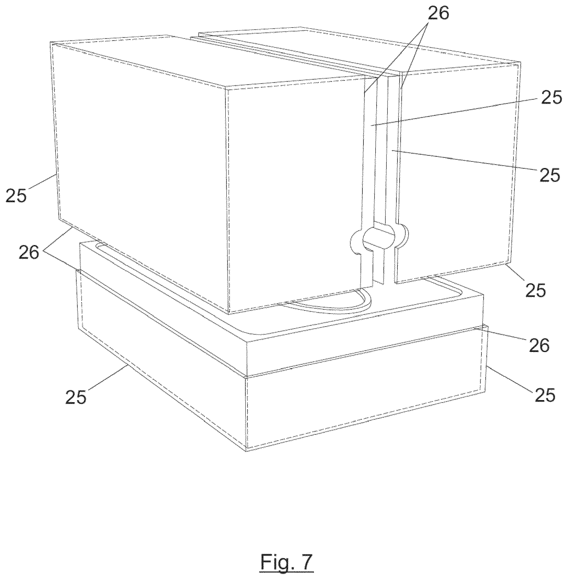

This arrangement can be better appreciated in figure 7, representing a mould consisting of two pieces (27-28), and a counter-mould (29) which are provided with an outer coating (25), similar to that of figure 4, by way of a lining, based on a material having high deformation capacity, slightly projecting from the facing surfaces of the pieces (27-28-29). By attaching and adjusting to each other the pieces of the mould and counter-mould, the edges of the coating (25) rest against each other and, thanks to the deformation capacity thereof, they form an outer tight closure for the mould assembly.

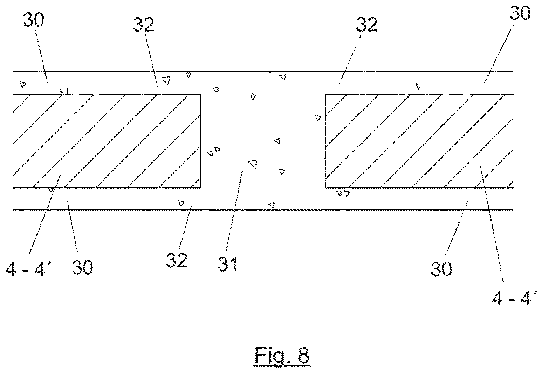

When the pieces (4-4') forming the article to be obtained are made of a material having low adherence capacity for the injected plastic, said pieces can be provided with an outer laminar coating (30), figure 8, for example based on a fabric which, as well as providing a good adherence for the plastic (31) being injected, can be penetrated by said plastic along the width of a peripheral strip (32) that will also act as a closure so as to prevent said plastic material from penetrating deeper into the outer laminar coating (30) and as gripping or anchoring means for the laminar coating.

## Claims

1. Method for manufacturing three-dimensional articles, by means of a mould (1-2) and a counter-mould (3) between which a space is delimited having the shape and volume of the article to be obtained, said article consisting of laminar pieces (4-4') being arranged between the mould and the counter-mould, and bound by means of a plastic material being injected through a conduit network (5-7) delimited between the mould, counter-mould and laminar pieces, **characterized in that** said conduit network (5-7) is connected through at least one first point (8) to the means for injecting the plastic material in a liquid state or without curing, whereas through at least one second point (9), being distant from the first point (8), said channel network is connected to a vacuum source.

2. Method according to claim 1, **characterized in that** the conduit network (5-7) is connected, through said second point or points (9), to an auxiliary vacuum chamber (17) formed onto the mould which, in turn, is connected to a vacuum source.

3. Method for manufacturing three-dimensional articles according to claim 1, by means of a mould (1 and 2) and a counter-mould (3) comprising, at the mutual support surfaces thereof, recesses (11-12) facing each other which delimit, upon attaching said mould and counter-mould, tight chambers (13) that can be connected to a vacuum source, **characterized in that** the conduit network (5) is connected through second point or points (14) to the tight chamber or chambers (13) delimited between the mould and counter-mould, the tight chambers (13) of which are connected, in turn, to a vacuum source.

4. Method according to the previous claims, **characterized in that** the conduit network (5-7) is provided, at the second points (9-14), with filters being air permeable and impermeable to the plastic injected therein.

5. Method according to the previous claims, **characterized in that** the injected plastic material undergoes, once inside the conduit network, a reaction causing expansion thereof.

6. Method according to the previous claims, **characterized in that** the mould and/or counter-mould are provided, along the perimeter delimiting the areas occupied by the pieces forming the article to be obtained, with tight gaskets.

7. Method according to the previous claims, **characterized in that** fastening of the pieces forming the article to be obtained on the mould is performed by means of vacuum, created through the conduits which open into the mould surface, in the areas that said pieces will occupy, and start from the chamber through which vacuum is created in the conduit network.

8. Method according to the previous claims, **characterized in that** the laminar pieces (4-4') have oblique cuts (19-20) facing each other, between which angled channels (21) are delimited, the vertex (22) of which is directed towards the outer surface of the article to be obtained.

9. Method according to the previous claims, **characterized in that** the pieces (1 and 2) forming the mould are provided with an outer coating (25), based on a material with high deformation capacity, the edges (26) of which rest against each other upon attaching said pieces.

10. Method according to the previous claims, **characterized in that** on the facing surfaces of the pieces forming the mould, and around the areas that the pieces forming the article to be obtained will occupy, a coating is applied of a substance having high deformation capacity, such as silicone.

11. Method according to the previous claims, **characterized in that** on the surfaces of the mould onto which the pieces of the article to be obtained are arranged, a substance is applied, such as silicone, acting as a slip agent between said surfaces and pieces.

12. Method according to the previous claims, **characterized in that** the pieces forming the article to be obtained are provided with an outer coating (30) based on a material having high adherence capacity with respect to the injected plastic material.
